# EUROPEAN PATENT APPLICATION

(11) **EP 1 656 829 A1**
(43) Date of publication of application: **17.05.2006**
(21) Application number: 05255931.7
(22) Date of filing: 23.09.2005
(51) Int. Cl.: A01K 27/00

(54) **Coupling structure of lead to pet accessory**

(30) Priority: 30.09.2004 JP 2004287478
(71) Applicant: Tozawa, Masashi, Moriguchi-shi Osaka (JP)
(72) Inventor: Tozawa, Masashi, Moriguchi-shi Osaka (JP)
(74) Representative: Haley, Stephen

(57) **Abstract**

A coupling structure of a lead to a pet accessory is provided. In this structure, an arc-shaped guide bar (12) is provided in a pet accessory such as a harness (1), which is put on one of the periphery of the body and the periphery of the neck of a pet (P). The guide bar (12) extends above the periphery of one of the body, the neck, and the border between the body and the neck of the pet (P). A ring (14) to which a hook (16) at an end of a lead (15) is coupled is slidably attached to the guide bar (12). Thus, when the lead (15) is horizontally pulled, it is possible to reduce rotation moment functioning so as to try to topple the pet (P) sideways, or reduce force functioning so as to rotate the pet accessory, and hence it is possible to provide the pet accessory tender to the pet (P).

## Description

The present invention relates to a coupling structure of a lead to a pet accessory such as a harness, a collar, clothes for a pet, and the like.

In walking a pet, a hook at an end of a lead is generally coupled to a ring provided in a collar or a harness put on a pet for the purpose of controlling the behavior of the pet by the lead.

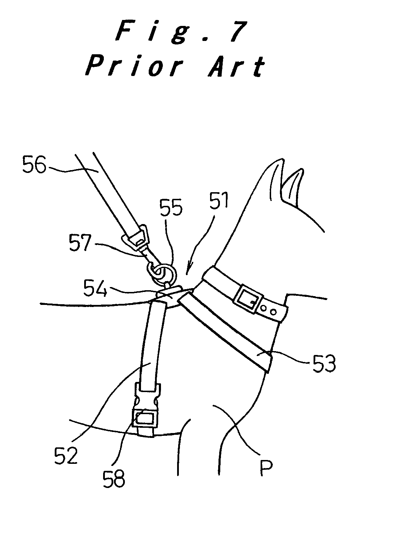

For example, in a conventional harness 51 put on a pet, as shown in Fig. 7, a cross portion 54 positioned in the upper end portion of the border between a neck and a body couples a body belt 52 wound around the body and a neck belt 53 wound around the neck. A ring 55 is swingably attached to the approximately middle of the cross portion 54. A hook 57 at an end of a lead 56 is coupled to the ring 55, so that a pet P is controlled with the lead 56. The hook 57 is rotatable about a vertical axis to prevent the lead 56 from twisting if the pet P moves in various directions. In Fig. 7, a reference number 58 refers to a buckle for attachment which is provided in the body belt 52. Another buckle is also provided in the neck belt 53 in a like manner, though it is not illustrated. Each of the body belt 52 and the neck belt 53 has a length adjustment unit, though they are not illustrated. Also, there is a harness in which a body belt 52 and a neck belt 53 are composed of a strip of belt by crossing the body belt 52 and the neck belt 53 in a cross portion 54 to provide a shape of "8". In such a case, only one length adjustment unit is provided.

In the case of a collar, a ring is swingably attached to the proper position of a belt, which can be put on and off a pet in the shape of a ring.

In case of using the harness 51 having the above structure as shown in Fig. 7, however, when the pet P has further tried to move in a horizontal direction, or when an owner has pulled the lead 56 in the horizontal direction in a state where the lead 56 has been almost completely stretching, the upper portion of the border between the neck and the body of the pet P is pulled in the horizontal direction. Thus, rotation moment functions so as to try to topple the pet P sideways, and hence applies an excessive load and stress to the pet P. Therefore, there was a problem that the harness 51 was not tender to the pet P.

In case of using the foregoing collar, rotation moment does not function, when the collar easily rotates around the neck. Since the collar rotates instead whenever the lead 56 is horizontally pulled, rolling friction repeatedly occurs. Thus, there was a problem that the lie of hair and a skin under the collar were susceptible to damage.

Considering the foregoing conventional problems, an object of the present invention is to provide a coupling structure of a lead to a pet accessory which is tender to a pet, by means of reducing rotation moment functioning so as to try to topple a pet sideways, or reducing force functioning so as to rotate the pet accessory when a lead has been pulled in a horizontal direction.

To achieve the foregoing object, in the coupling structure of a lead to a pet accessory according to the present invention, an arc-shaped guide bar is provided in a pet accessory, which is put on one of the periphery of the body and the periphery of the neck of a pet. The guide bar extends above the periphery of one of the body, the neck, and the border between the body and the neck of the pet. A ring to which a hook at an end of a lead is coupled is movably attached to the guide bar.

According to this structure, the ring, to which the hook at the end of the lead is coupled, is slidable along the guide bar above one of the body, the neck, and the border between the body and the neck in a horizontal direction. Thus, when the lead is horizontally pulled, the ring smoothly moves in a pulled direction, so that tractive force acts in a moved position. Therefore, if the lead is pulled in the horizontal direction, it is possible to reduce rotation moment functioning so as to try to topple the pet sideways, or reduce force functioning so as to rotate the pet accessory, and hence it is possible to provide the pet accessory tender to the pet.

The pet accessory according to the present invention is a harness which is put on both of the periphery of the body and the periphery of the neck of a pet. The guide bar extends above the border between the body and the neck. Thus, in the harness being a tender accessory for the pet, if a lead has been further pulled in the horizontal direction, it is possible to tenderly control the pet without stress, so that it is possible to provide the pet accessory which is further tender to the pet.

Preferred embodiments of the present invention will be hereinafter described with reference to the accompanying drawings, in which:
Fig. 1 is a perspective view showing an operation condition of a harness according to a first embodiment, to which the coupling structure of a lead to a pet accessory according to the present invention is applied;
Fig. 2 is a plan view of the harness according to the first embodiment;
Fig. 3 is a plan view of an essential portion of the harness according to the first embodiment;
Fig. 4 is a perspective view of a harness according to a second embodiment, to which the coupling structure of a lead to a pet accessory according to the present invention is applied;
Fig. 5 is a perspective view showing an operation condition of clothes for a pet according to a third embodiment, to which the coupling structure of a lead to a pet accessory according to the present invention is applied;
Fig. 6 is a perspective view of a collar according to a fourth embodiment, to which the coupling structure of a lead to a pet accessory according to the present invention is applied; and
Fig. 7 is a side view showing an operation condition of a harness according to a conventional example.

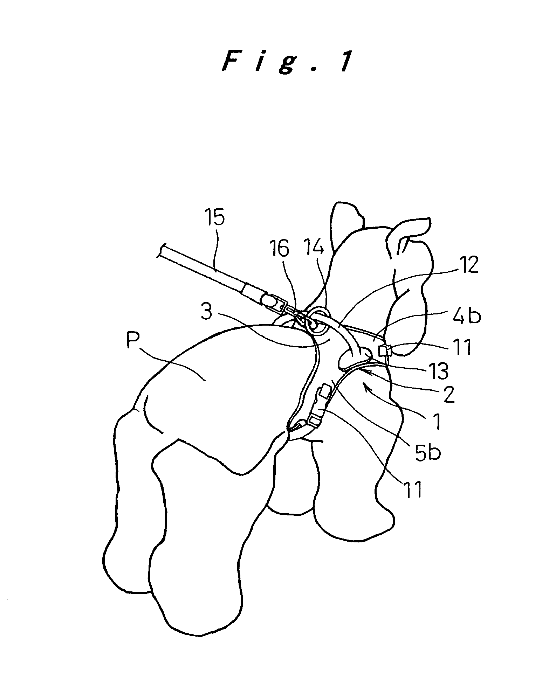

A first embodiment of the coupling structure of a lead to a pet accessory according to the present invention will be hereinafter described with reference to Figs. 1 to 3.

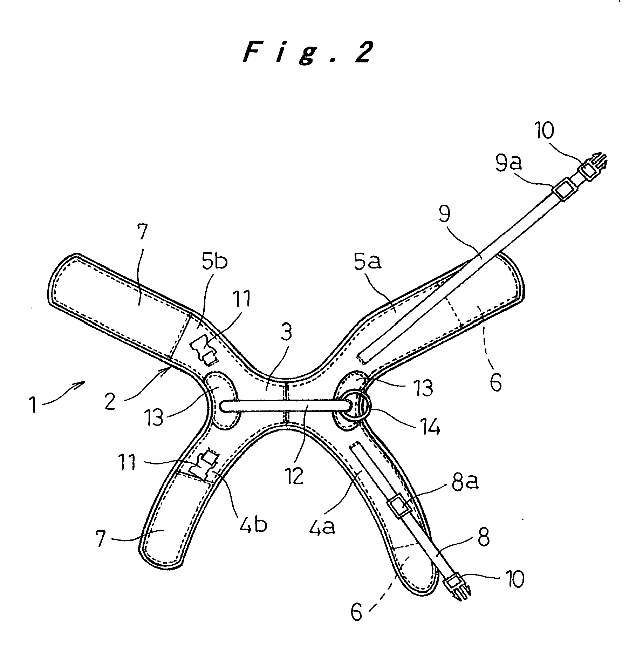

In Figs. 1 and 2, a reference number 1 refers to a harness as a pet accessory. The harness 1 is made of cloth in which a stiffening padding is tucked. The harness 1 comprises a harness body 2 formed in the shape of the letter X. In the harness body 2, a pair of neck belts 4a and 4b wound around a neck, and a pair of body belts 5a and 5b wound around a body extend from a middle cross portion 3 having a relatively wide breadth. A hook and loop fastener 6, in which hooks are densely implanted, is attached to the rear face of an end portion of each of the neck belt 4a and the body belt 5a. A relatively long hook and loop fastener 7, in which loop pile is densely implanted, is attached to the front face of an end portion of each of the neck belt 4b and the body belt 5b. Thus, the neck belts 4a and 4b and the body belts 5a and 5b are wound around the neck and the body, respectively, with adjusting their length.

A base end of an auxiliary belt 8 is secured to the surface of a base portion of the neck belt 4a, and a base end of an auxiliary belt 9 is secured to the surface of a base portion of the body belt 5a. A male connector 10 is attached to the other end of each of the auxiliary belts 8 and 9. A female connector 11, into which the male connector 10 is detachably inserted, is attached to the surface of a base portion of each of the neck belt 4b and the body belt 5b. The auxiliary belts 8 and 9 are provided with length adjustment units 8a and 9a, respectively.

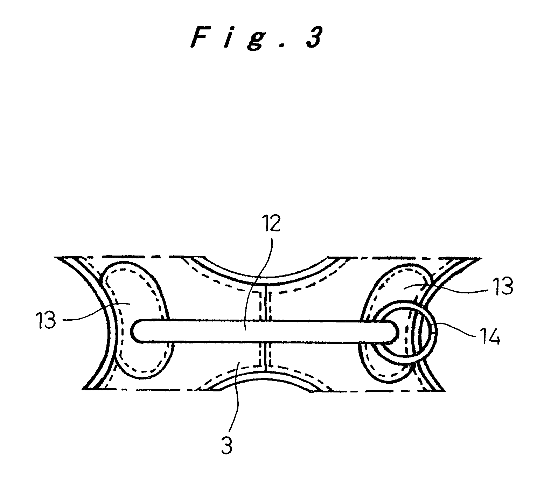

In the cross portion 3, as shown in Fig. 3 with enlargement, an arc-shaped guide bar 12 made of a synthetic resin is provided in a horizontal direction. Both end portions of the guide bar 12 are secured to both side end portions of the cross portion 3 with rivets (not illustrated) or the like. A reinforcing member 13 is attached to a guide bar secured section of the cross portion 3 for reinforcing. A ring 14 is movably attached to the guide bar 12, and, as shown in Fig. 1, a hook 16 at an end of a lead 15 is coupled to the ring 14.

According to the harness 1 with the foregoing structure, as shown in Fig. 1, the cross portion 3 of the harness body 2 is put on the border between the neck and the body of a pet P. The neck belts 4a and 4b are wound around the neck, and the end portions of the neck belts 4a and 4b are fastened to each other with the hook and loop fasteners 6 and 7. Then, the length of the auxiliary belt 8 is adjusted, and the male connector 10 at the end thereof is inserted into the female connector 11. The body belts 5a and 5b are wound around the body, and the end portions of the body belts 5a and 5b are fastened to each other with the hook and loop fasteners 6 and 7. Then, the length of the auxiliary belt 9 is adjusted, and the male connector 10 at the end thereof is inserted into the female connector 11. Accordingly, the harness 1 is put on the pet P.

Then, the hook 16 at the end of the lead 15 is coupled to the ring 14 attached to the guide bar 12 in order to walk the pet P with holding the lead 15. During a walk, if the lead 15 is horizontally pulled to pull back the pet P moving sideways, the ring 14 smoothly moves in a pulled direction because the ring 14 is slidable in the horizontal direction. Thus, tractive force acts on the harness 1 in a moved position. Therefore, it is possible to reduce rotation moment functioning so as to try to topple the pet P sideways, if the lead 15 is pulled in the horizontal direction. The harness 1 according to this embodiment, as described above, is tender to the pet P without applying an excessive load and stress to the pet P.

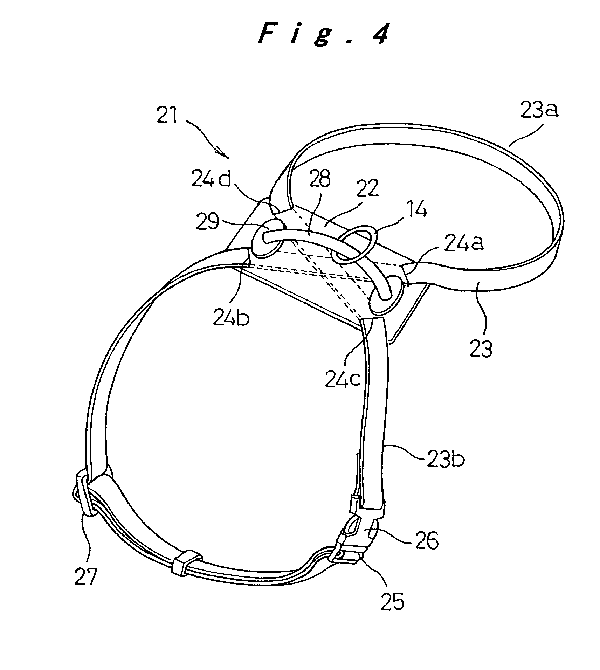

Next, a second embodiment of the coupling structure of a lead to a pet accessory according to the present invention will be described with reference to Fig. 4.

In the foregoing first embodiment, the harness 1 has the X-shaped harness body 2 made of cloth. A harness 21 according to this embodiment comprises a support member 22 composing a cross portion with a relatively wide breadth, and a belt member 23. The support member 22 is in the shape of a rectangle with rounded-corners, an ellipse, or a gourd, and is made of a synthetic resin or leather. The belt member 23 is crossed in the shape of "8" so as to form a neck belt 23a wound around the neck of a pet and a body belt 23b wound around the body thereof.

Slits 24a to 24d through which the belt member 23 passes are formed in the four corners of the support member 22. The belt member 23 goes downward through one of the diagonal slits 24a, and is taken upward out of the other diagonal slit 24b. The belt member 23 also goes downward through one of the other diagonal slits 24c, and is taken upward out of the other diagonal slit 24d. Thus, as described above, the belt member 23 is held in the shape of "8" through the support member 22. A male connector 25 and a female connector 26, which are coupled to each other, are attached to both ends of the belt member 23, and a length adjustment unit 27 is provided in the middle of the belt member 23.

An arc-shaped guide bar 28 made of a synthetic resin is horizontally provided to the support member 22. Both end portions of the guide bar 28 are secured to both side end rtions of the support member 22 with rivets (not illustrated) or the like. A reinforcing member 29 is attached to guide bar secured sections of the support member 22 for reinforcing. A ring 14 is slidably attached to the guide bar 28.

In the harness 21 according to this embodiment with the foregoing structure, although concrete structure differs from that of the harness 1, the ring 14 is slidably attached to the arc-shaped guide bar 28 provided in the support member 22 being the cross portion. Therefore, it is possible to have the same effect as the foregoing embodiment.

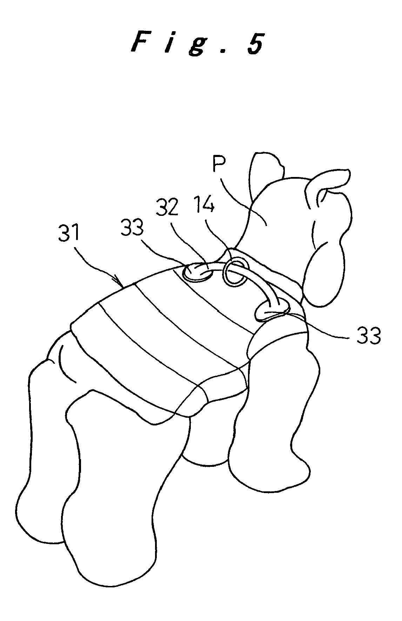

Next, a third embodiment of the coupling structure of a lead to a pet accessory according to the present invention will be described with reference to Fig. 5.

In the foregoing first embodiment, the pet accessory is the harness 1 having the cross portion 3, the neck belt 4a, and the body belt 4b. In this embodiment, however, the pet accessory is clothes 31 put on a pet P. Also in this embodiment, an arc-shaped guide bar 32 made of a synthetic resin horizontally extends above the border between the neck and the body of the clothes 31 for the pet. Both end portions of the guide bar 32 are secured with rivets (not illustrated) or the like, and a reinforcing member 33 is attached to guide bar secured sections for reinforcing. A ring 14 is slidably attached to the guide bar 32.

Also in the clothes 31 for the pet according to this embodiment, since the ring 14 is slidably attached to the arc-shaped guide bar 32, it is possible to have the same effect as the foregoing embodiments.

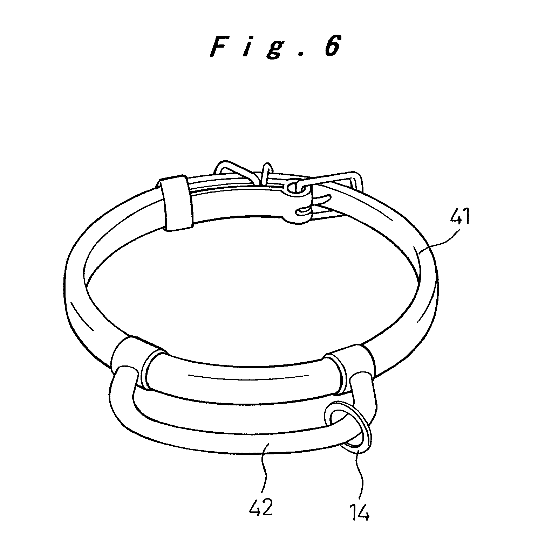

A fourth embodiment of the coupling structure of a lead to a pet accessory according to the present invention will be described with reference to Fig. 6.

In the foregoing first embodiment, the pet accessory is the harness 1. In this embodiment, however, the pet accessory is a collar 41 put on a pet. In this embodiment, an arc-shaped guide bar 42 made of a synthetic resin is provided on the outer periphery of the collar 41 with leaving a gap. Both end portions of the guide bar 42 are secured to the collar 41. A ring 14 is slidably attached to the guide bar 42.

In the collar 41 according to this embodiment, the ring 14 is movably attached to the arc-shaped guide bar 42. Thus, when a lead has been horizontally pulled, the ring 14 smoothly moves in a pulled direction, so that tractive force acts in a moved position. Therefore, it is possible to reduce force functioning so as to rotate the collar 41, and hence the pet accessory tender to the pet is provided.

As described above, in the coupling structure of a lead to a pet accessory according to the present invention, the arc-shaped guide bar extending along one of the upper portion of the body, the neck, and the border between the body and the neck is provided, and the ring is slidably attached to the guide bar. Thus, it is possible to reduce the rotation moment functioning so as to try to topple the pet sideways, or reduce the force functioning so as to rotate the pet accessory, if the lead coupled to the ring is pulled in the horizontal direction. Therefore, it is possible to actualize the pet accessory tender to the pet.

## Claims

1. A coupling structure of a lead to a pet accessory wherein: an arc-shaped guide bar (12) is provided in a pet accessory, which is put on one of a periphery of a body and a periphery of a neck of a pet (P), the guide bar (12) extending above the periphery of one of the body, the neck, or a border between the body and the neck of the pet (P); and a ring (14) to which a hook (16) at an end of a lead (15) is coupled is movably attached to the guide bar (12).

2. The coupling structure of a lead to a pet accessory according to claim 1, wherein:
the pet accessory is a harness (1) which is put on both of the periphery of the body and the periphery of the neck of the pet (P); and
the guide bar (12) is provided to extend the border between the body and the neck.
